# EUROPEAN PATENT SPECIFICATION

(11) **EP 1 633 821 B1**
(45) Date of publication and mention of the grant of the patent: **24.02.2016**
(21) Application number: 04755133.8
(22) Date of filing: 14.06.2004
(51) Int. Cl.: C09D 7/00, C09D 7/12, C09D 133/08, C09D 133/10

(54) **HIGH BUILD COATING COMPOSITIONS**
DICKSCHICHTIGE BESCHICHTUNGSZUSAMMENSETZUNGEN
COMPOSITIONS DE REVETEMENT A POUVOIR GARNISSANT ELEVE

(30) Priority: 16.06.2003 US 478949 P
(43) Date of publication of application: 15.03.2006
(73) Proprietor: The Sherwin-Williams Company, Cleveland, OH 44115 (US)
(72) Inventor: DUKLES, Jean, M., Fairview Park, OH 44126 (US); KALINA, Heather, A., Cleveland, OH 44144 (US); SABO, Lynn, O., Strongsville, OH 44136 (US); LUKE, Elmer, D., Girard, OH 44420 (US)
(74) Representative: Morf, Jan Stefan
(86) International application number: PCT/US2004/018787
(87) International publication number: WO 2004/113460

(56) References cited:
- US-A- 3 839 059
- US-A- 4 240 936
- US-A- 5 620 509
- US-B1- 6 214 450

## Description

This application claims the benefit of U.S. Provisional Application No. 60/478,949 filed June 16, 2003.

### BACKGROUND

Finishing drywall to a smooth, level finish is a labor and time-intensive process. The current drywall process involves 3-4 days during which consecutive applications of drywall compound are applied to the wall to provide a uniform wall surface capable of receiving a coating providing an acceptable aesthetic appearance. Current high-build primer/surfacers can only mask very minor surface flaws and must still be used over fairly uniform substrates.

Previous work by Tampio US5620509 illustrates the use of fiber and foaming agents for the purpose of sound absorption using the fiber as the only filler. A second work by Rothfelder, et al, US3839059 demonstrates the use of fiber in fire retardant coatings using large cellulosic fibers. The present invention is distinctive from these previous works both in purpose and in composition with the former using only fiber as the filler while the invention can use many common filler pigments in conjunction with the fibers and with the latter using fibers of 3-10 times larger size than in the present invention.

It is an object of this invention to provide a high-build coating composition with improved masking and filling capabilities functioning as a primer for the drywall, therefore saving time and labor in the preparation of the drywall. The coating composition of this invention comprises hydrophilic fibers, and/or at least one foam booster, and at least one foam stabilizer. The preferred composition uses fibers, foam booster and foam stabilizer. It is another object of this invention is to provide a novel coating composition having no defoamer present.

### SUMMARY OF THE INVENTION

According to this invention, there is provided a sag and shrinkage resistant waterborne coating composition comprising hydrophilic fibers, at least one foam booster, and at least one foam stabilizer. The coating composition comprises between 1% by weight and 5% by weight of hydrophilic fibers; between 0.1% by weight and 1.0% by weight of at least one foam booster; between 0.05% by weight and 0.5% by weight of at least one foam stabilizer and between 30% by weight and 40% by weight based on the total weight of the coating composition of fillers and/or extenders. The hydrophilic fibers which can be cellulose fibers, have a particle size between 10 microns to 50 microns, and a particle diameter of between 5 microns to 25 microns. At least one foam booster is generally an anionic surfactant, and the at least one foam stabilizer is generally a nonionic surfactant. The coating composition can further comprise an associative thickener, such as an alkali swellable thickener and/or a cellulosic thickener.

### DESCRIPTION OF THE INVENTION

Waterborne coating compositions according to this invention comprise hydrophilic fibers, at least one foam booster and at least one foam stabilizer. The use of these hydrophilic fibers encourages entrapment of more air to improve shrink resistance of the coating and also contributes to a unique coating rheology.

It has been found that the addition of a small amount of foam booster and foam stabilizer, in the absence of defoamer, to the coating compositions comprising hydrophilic fibers significantly improves the masking performance (of substrate imperfections) of paint compositions. The foam booster and foam stabilizer act to produce a stable microfoam produced through surfactant stabilization. The stable microfoam provides a higher film build and greater shrink resistance compared to conventional latex (or waterborne) formulations. The foam is generated through mixing in the manufacturing process. After application, the air pockets are stable enough to be maintained until the paint is dry. These pockets provide build, masking, and shrink resistance.

The synergistic effect of the hydrophilic fibers with foam booster and foam stabilizer gives the optimum results of this invention. Hydrophilic fibers, when used in combination with the foam booster and foam stabilizer, provides more structure to the coating which displays a significant improvement in masking surface defects over the use of foam booster and foam stabilizer alone.

The selection of the hydrophilic fibers of the composition of this invention can be optimized depending on the nature of the substrate or the method of application. Hydrophilic fibers can include, but not limited to, cellulose fibers, for example, mechanical pulp, chemical pulp, semichemical pulp, digested pulp, as obtained from wood; and artificial cellulose fibers. The average length of the fibers is generally between 20 microns and 40 microns, and suitable fibers can range from 10 microns to 50 microns. If the average fiber length of the fibers is less than 10 microns, however, the advantageous results of the masking effects of this invention may not be realized.

Also, with respect to fiber length and size, for example, optimum compositions for one-coat or two-coat application by spray application, preferably but not limited to airless spray, may be obtained by using amounts from 1 percent by weight to 5 percent by weight of hydrophilic fibers having average fiber lengths of 30 microns and average fiber diameter of about 18 -20 microns. The application of the composition of this invention by means of spray delivery makes it possible to easily apply one or more coats of the composition on uneven or curved surfaces, with a dry coating layer of from about 1 mil to 80 mils of wet film build, preferably 20-40 wet mils, without any sagging.

The specific types and amounts of foam boosters and foam stabilizers can vary according to the specific coatings formulation. According to this invention, the foam booster of this invention is an anionic surfactant. Suitable foam boosters can include sodium lauryl sulfate, potassium lauryl sulfate, ammonium lauryl sulfate, and others.

The foam stabilizer of this invention is a nonionic surfactant, such as fatty alkanolamides, that can be formed by the reaction of alkanolamines and fatty acids. Fatty alkanolamides are known to stabilize the foaming action of other surfactants. Examples of fatty alkanolamides include tall oil fatty acid diethanolamide, lauric acid diethanolamide, coconut diethanolamide, and oleic acid monoethanolamide, or other fatty acid alkanolamides derived from monoethanolamine and diethanolamine, and others. For example, a commercially available fatty alkanolamide is Witcamide 128T, coconut diethanolamide (contains 6% diethanolamine), available from Akzo Nobel Industrial Specialties of Chicago, Illinois.

The coating composition of this invention comprises 1% to 5% by weight of hydrophilic fibers, 0.1% to 1% of at least one foam booster, 0.05% to 0.5% by weight of at least one foam stabilizer and 30% by weight to 40% by weight of fillers and/or extenders. In addition to the above ingredients, the compositions of this invention may contain any other components generally present in coating compositions.

Additional components such as the use of rheology modifiers can also greatly improve the performance of the coating. Adjustments to the rheology utilizing associative thickeners, such as alkali swellable thickeners or cellulosic thickeners for example, to produce a more thixotropic profile will aid in the foam stability and sag resistance of the final product while the paint dries. Examples of associative thickeners include, but are not limited to, hydrophobically-modified alkali-soluble acrylic copolymers (for example, Acrysol TT 935 from Rohm & Haas, Philadelphia, PA), and/or cellulosic thickeners such as hydroxyethylcellulose, hydroxypropylcellulose, carboxymethylcellulose, etc. (for example, Cellosize ER-52000 from Union Carbide, Danbury, CT). These thickeners are typically used to control the viscosity for improved application by brush, roller, or spray. The thickeners may also help entrap foam and enable a high film build without sagging. The level of thickener is present in an amount effective to maintain the coating composition as a sag resistant film.

For airless spray applications, it is also desirable that the coating composition comprise glass microspheres which aid in pump throughput. The microspheres can range from 15 microns to 70 microns, with an average size of 40 microns for airless spray application. The microspheres typically has at least a 6,000 psi crush strength to prevent them from cracking during airless spray. An example of this microsphere is the Scotchlite K-46 from 3M Corporation, St.Paul, Minnesota, 55144-1000.

### EXAMPLES

In general, the foam and fiber compositions of this invention can be prepared in a charged mixer according to the formulation given in Table I. The percent figures are given as percent by weight.

**TABLE I.**

| General Formula | |
|---|---|
| Raw Material | Range of Composition, by Weight % |
| Polymeric emulsion | 18 - 24 |
| Water | 22 - 51 |
| Humectant | 0 - 5 |
| Anti-Settling Agent | 0 - 1 |
| Dispersants | 0.1 - 2 |
| Microbiocide | 0 - 0.1 |
| Foam Booster | 0.1 - 0.5 |
| Foam Stabilizer | 0.05 - 0.5 |
| White Pigment | 0 - 10 |
| Fillers/Extenders | 30 - 40 |
| Coalescing aids | 0 - 4 |
| Hydrophilic Fiber | 1 - 5 |
| Glass Microspheres | 0 - 2 |
| Alkali Swellable Thickener | 0.5 - 2 |
| Cellulosic Thickener | 0.1 - 0.8 |
| Buffer | 0 - 0.3 |

### EXAMPLE 1

Example 1 is a latex formulation comprising hydrophilic fibers, a foam booster and a foam stabilizer. The high build latex paint preparation is prepared by adding about 0.34% by weight of 30% active sodium lauryl sulfate (foam booster) and about 0.10% by weight of Witcamide 128T (coconut diethanolamide, a foam stabilizer) according to the following formulation:

| Raw Material | Weight % |
|---|---|
| Vinyl Acrylic/Acrylic emulsion | 21.63 |
| Water | 27.43 |
| Ethylene Glycol | 2.40 |
| Attapulgite Clay | 2.40 |
| TKPP | 0.19 |
| Anionic dispersant (TAMOL 850, 30% active) | 0.94 |
| Proxel GXL | 0.05 |
| Sodium Lauryl Sulfate, 30% active | 0.34 |
| Witcamide 128T | 0.10 |
| Titanium Dioxide | 4.72 |
| Mica | 4.72 |
| Calcium Carbonate | 30.05 |
| Texanol | 1.16 |
| Dalpad A | 0.77 |
| Cellulose Fiber, 30 micron | 2.40 |
| Glass Microspheres, 40 micron | 0.52 |
| Acrysol TT-935 | 1.06 |
| Cellosize ER-5200 | 0.58 |
| Ammonia | 0.17 |

The composition according to Examples 1 may be applied using airless spray equipment, rollers or brushes, or any other technique that will apply a sufficiently thick coating to the surface to mask surface defects. In general, coatings up to about 80 wet mil thickness do not exhibit any sagging and are more shrink resistant than a conventional latex coating.

The composition of Example 1 was applied to release paper. The application is carried out in one coat, with a total drawdown of 24 mils wet. The percent shrinkage is 50% as determined using a micrometer.

### EXAMPLE 2

### Latex formulation with Hydrophilic Fibers only

Example 2 is a latex formulation comprising hydrophilic fibers and also comprising a defoamer, but without a foam booster or foam stabilizer. The high build latex paint preparation is obtained by adding about 2.4% by weight of ARBOCEL® BE 600-30, a cellulose fiber by J. RettenmaierUSA LP, having an average length of 30 microns and an average fiber diameter of 18-20 microns.

| Raw Material | Weight % |
|---|---|
| Vinyl Acrylic/Acrylic emulsion | 21.66 |
| Water | 26.91 |
| Ethylene Glycol | 2.41 |
| Attapulgite Clay | 0.77 |
| TKPP | 0.19 |
| Anionic dispersant (TAMOL 850,30% active) | 0.95 |
| Proxel GXL | 0.05 |
| Sodium Lauryl Sulfate, 30% active | 0 |
| Witcamide 128T | 0 |
| Titanium Dioxide | 4.73 |
| Mica | 4.73 |
| Calcium Carbonate | 30.08 |
| Texanol | 1.16 |
| Dalpad A | 0.77 |
| Cellulose Fiber, 30 micron | 2.41 |
| Glass Microspheres, 40 micron | 0.52 |
| Acrysol TT-935 | 1.07 |
| Cellosize ER-5200 | 0.58 |
| Ammonia | 0.15 |
| Defoamer | 0.86 |

The composition is applied to release paper. The application is carried out in one coat, with a total drawdown of 25 mils. The percent shrinkage is 54%, as determined using a micrometer.

### EXAMPLE 3

### Latex formulation with Foam Booster and Foam Stabilizer Only

Example 3 is a latex formulation with foam booster and foam stabilizer, but without defoamer or fibers. The high build latex paint preparation is prepared by adding about 0.34% by weight of 30% active sodium lauryl sulfate (foam booster) and about 0.10% by weight of Witcamide 128T (coconut diethanolamide, a foam stabilizer).

| Raw Material | Weight % |
|---|---|
| Vinyl Acrylic/Acrylic emulsion | 21.22 |
| Water | 26.86 |
| Ethylene Glycol | 2.36 |
| Attapulgite Clay | 0.76 |
| TKPP | 0.19 |
| Anionic dispersant (TAMOL 850, 30% active) | 0.93 |
| Proxel GXL | 0.05 |
| Sodium Lauryl Sulfate, 30% active | 0.34 |
| Witcamide 128T | 0.10 |
| Titanium Dioxide | 4.63 |
| Mica | 4.63 |
| Calcium Carbonate | 33.74 |
| Texanol | 1.14 |
| Dalpad A | 0.76 |
| Cellulose Fiber, 30 micron | 0 |
| Glass Microspheres, 40 micron | 0.51 |
| Acrysol TT-935 | 1.04 |
| Cellosize ER-5200 | 0.57 |
| Ammonia | 0.17 |

The composition is applied to release paper. The application is carried out in one coat, with a total drawdown of 25 mils. The percent shrinkage was 57%, as determined using a micrometer.

**TABLE 2.**

| The following table summarizes results of the above Examples: | | | | |
|---|---|---|---|---|
| Description | | | | Appearance over Unsanded Level 3 Drywall Joint |
| | Wet mils | Dry mils | % shrinkage | |
| Typical Latex formulation with defoamer | 26 | 10.8 | 58% | Smooth texture, Poor coverage |
| Example 1: Formulation with cellulose fibers, foam booster and foam stabilizer | 24 | 12.0 | 50% | Moderate texture, Good coverage |
| Example 2: Formulation with cellulose fiber only | 25 | 11.6 | 54% | Smooth texture, Fair coverage |
| Example 3: Formulation with foam booster and foam stabilizer only | 25 | 10.7 | 57% | Slight texture, Fair coverage |

## Claims

1. A waterborne coating composition comprising:
(a) Between 1% by weight and 5% by weight based on the total weight of the coating composition of hydrophilic fibers, wherein the hydrophilic fibers have a particle size of between 10 microns to 50 microns;
(b) between 0.1% by weight and 1.0% by weight based on the total weight of the coating composition of at least one foam booster;
(c) between 0.05% by weight and 0.5% by weight based on the total weight of the coating composition of at least one foam stabilizer; and
(d) between 30% by weight and 40% by weight based on the total weight of the coating composition of fillers and/or extenders;
wherein the coating composition is sag and shrinkage resistant.

2. The waterborne coating composition of claim 1, wherein there is no defoamer present.

3. The waterborne coating composition of claim 1, wherein the hydrophilic fibers are cellulose fibers.

4. The waterborne coating composition of claim 1, wherein the hydrophilic fibers have a particle diameter of between 5 microns to 25 microns.

5. The waterborne coating composition of claim 1, wherein the foam booster is an anionic surfactant.

6. The waterborne coating composition of claim 1, wherein the foam booster is selected from the group consisting of sodium lauryl sulfate, potassium lauryl sulfate, ammonium lauryl sulfate.

7. The waterborne coating composition of claim 1, wherein the foam booster is sodium lauryl sulfate.

8. The waterborne coating composition of claim 1, wherein the foam stabilizer is a nonionic surfactant.

9. The waterborne coating composition of claim 1, wherein the foam stabilizer is a fatty alkanolamide.

10. The waterborne coating composition of claim 8, wherein the foam stabilizer is tall oil fatty acid diethanolamide, lauric acid diethanolamide, coconut diethanolamide, and oleic acid monoethanolamide, or other fatty acid alkanolamides derived from monoethanolamine and diethanolamine.

11. The waterborne coating composition of claim 1, further comprising a thickener.

12. The waterborne coating composition of claim 10, wherein the associative thickener is present in an amount effective to maintain the waterborne coating composition as a sag resistant film.

13. The waterborne coating composition of claim 10, wherein the thickener is an alkali swellable thickener.

14. The waterborne coating composition of claim 1, further comprising a cellulosic thickener.

15. The waterborne coating composition of claim 13, wherein the cellulosic thickener is present in an amount of 0.1 weight percent to 3.0 weight percent, based on the total weight of the waterborne coating composition.

16. The waterborne coating composition of claim 1, further comprising glass microspheres.

17. The waterborne coating composition of claim 15, wherein the glass microspheres are between 15 microns and 70 microns.

18. The waterborne coating composition of claim 1, wherein the shrinkage from wet film thickness to dry film thickness is less than a conventional coating of comparable % nonvolatile by volume.

## Patentansprüche

1. Ein Beschichtungszusammensetzung auf Wasserbasis, umfassend:
(a) zwischen 1 Gew.-% und 5 Gew.-% hydrophile Fasern, bezogen auf das Gesamtgewicht der Beschichtungszusammensetzung, wobei die hydrophilen Fasern eine Teilchengröße zwischen 10 Mikrometern und 50 Mikrometern besitzen,
(b) zwischen 0,1 Gew.-% und 1,0 Gew.% wenigstens eines Schaumverstärkers, bezogen auf das Gesamtgewicht der Beschichtungszusammensetzung,
(c) zwischen 0,05 Gew.-% und 0,5 Gew.-% wenigstens eines Schaumstabilisators, bezogen auf das Gesamtgewicht der Beschichtungszusammensetzung, und
(d) zwischen 30 Gew.-% und 40 Gew.-% Füller und/oder Streckmittel, bezogen auf das Gesamtgewicht der Beschichtungszusammensetzung;
wobei die Beschichtungszusammensetzung ablauf- und schrumpfungsbeständig ist.

2. Die Beschichtungszusammensetzung auf Wasserbasis nach Anspruch 1, bei der kein Entschäumer vorliegt.

3. Die Beschichtungszusammensetzung auf Wasserbasis nach Anspruch 1, bei der die hydrophilen Fasern Zellulosefasern sind.

4. Die Beschichtungszusammensetzung auf Wasserbasis nach Anspruch 1, bei der die hydrophilen Fasern einen Teilchendurchmesser zwischen 5 Mikrometern und 25 Mikrometern besitzen.

5. Die Beschichtungszusammensetzung auf Wasserbasis nach Anspruch 1, bei der der Schaumverstärker ein anionisches Tensid ist.

6. Die Beschichtungszusammensetzung auf Wasserbasis nach Anspruch 1, bei der der Schaumverstärker ausgewählt ist aus der Gruppe, bestehend aus Natriumlaurylsulfat, Kaliumlaurylsulfat, Ammoniumlaurylsulfat.

7. Die Beschichtungszusammensetzung auf Wasserbasis nach Anspruch 1, bei der der Schaumverstärker Natriumlaurylsulfat ist.

8. Die Beschichtungszusammensetzung auf Wasserbasis nach Anspruch 1, bei der der Schaumstabilisator ein nichtionisches Tensid ist.

9. Die Beschichtungszusammensetzung auf Wasserbasis nach Anspruch 1, bei der der Schaumstabilisator ein Fettsäurealkanolamid ist.

10. Die Beschichtungszusammensetzung auf Wasserbasis nach Anspruch 8, bei der der Schaumstabilisator Tallölfettsäurediethanolamid, Laurinsäurediethanolamid, Kokosfettsäurediethanolamid und Ölsäuremonoethanolamid oder andere von Monoethanolamin und Diethanolamin abgeleitete Fettsäurealkanolamide ist.

11. Die Beschichtungszusammensetzung auf Wasserbasis nach Anspruch 1, ferner umfassend ein Verdickungsmittel.

12. Die Beschichtungszusammensetzung auf Wasserbasis nach Anspruch 10, bei der das assoziative Verdickungsmittel in einer Menge vorliegt, die bewirkt, dass die Beschichtungszusammensetzung auf Wasserbasis ein ablaufbeständiger Film bleibt.

13. Die Beschichtungszusammensetzung auf Wasserbasis nach Anspruch 10, bei der das Verdickungsmittel ein alkaliquellfähiges Verdickungsmittel ist.

14. Die Beschichtungszusammensetzung auf Wasserbasis nach Anspruch 1, ferner umfassend ein Zellulose-Verdickungsmittel.

15. Die Beschichtungszusammensetzung auf Wasserbasis nach Anspruch 13, bei der das Zellulose-Verdickungsmittel in einer Menge von 0,1 Gew.-% bis 3,0 Gew.-% vorliegt, bezogen auf das Gesamtgewicht der Beschichtungszusammensetzung auf Wasserbasis.

16. Die Beschichtungszusammensetzung auf Wasserbasis nach Anspruch 1, ferner umfassend Mikrokugeln aus Glas.

17. Die Beschichtungszusammensetzung auf Wasserbasis nach Anspruch 15, bei der die Mikrokugeln aus Glas zwischen 15 Mikrometern und 70 Mikrometern groß sind.

18. Die Beschichtungszusammensetzung auf Wasserbasis nach Anspruch 1, bei der die Schrumpfung von der Nassfilmdicke zur Trockenfilmdicke geringer ist als bei einer herkömmlichen Beschichtung mit vergleichbarem Volumenprozentsatz an nichtflüchtigen Bestandteilen.

## Revendications

1. Composition de revêtement à base d'eau comprenant :
(a) entre 1 % en poids et 5 % en poids, sur la base du poids total de la composition de revêtement, de fibres hydrophiles, la taille des particules de fibres hydrophiles étant entre 10 microns et 50 microns ;
(b) entre 0,1 % en poids et 1,0 % en poids, sur la base du poids total de la composition de revêtement, d'au moins un renforçateur de mousse ;
(c) entre 0,05 % en poids et 0,5 % en poids, sur la base du poids total de la composition de revêtement, d'au moins un stabilisateur de mousse ; et
(d) entre 30 % en poids et 40 % en poids, sur la base du poids total de la composition de revêtement, de matières de charge et/ou d'agents d'allongement ;
la composition de revêtement étant résistante aux coulures et au retrait.

2. Composition de revêtement à base d'eau de la revendication 1, dans laquelle aucun agent antimousse n'est présent.

3. Composition de revêtement à base d'eau de la revendication 1, dans laquelle les fibres hydrophiles sont des fibres de cellulose.

4. Composition de revêtement à base d'eau de la revendication 1, dans laquelle le diamètre des particules de fibres hydrophiles est entre 5 microns et 25 microns.

5. Composition de revêtement à base d'eau de la revendication 1, dans laquelle le renforçateur de mousse est un surfactant anionique.

6. Composition de revêtement à base d'eau de la revendication 1, dans laquelle le renforçateur de mousse est sélectionné dans le groupe consistant en le laurylsulfate de sodium, le laurylsulfate de potassium et le laurylsulfate d'ammonium.

7. Composition de revêtement à base d'eau de la revendication 1, dans laquelle le renforçateur de mousse est le laurylsulfate de sodium.

8. Composition de revêtement à base d'eau de la revendication 1, dans laquelle le stabilisateur de mousse est un surfactant non ionique.

9. Composition de revêtement à base d'eau de la revendication 1, dans laquelle le stabilisateur de mousse est un alcanolamide gras.

10. Composition de revêtement à base d'eau de la revendication 8, dans laquelle le stabilisateur de mousse est le diéthanolamide d'un acide gras de tallol, le diéthanolamide de l'acide laurique, le diéthanolamide de noix de coco, le monoéthanolamide de l'acide oléique ou d'autres alcanolamides d'acides gras dérivés d'un monoéthanolamine et d'un diéthalolamine.

11. Composition de revêtement à base d'eau de la revendication 1, qui comprend en outre un épaississant.

12. Composition de revêtement à base d'eau de la revendication 10, dans laquelle l'épaississant associatif est présent à une quantité efficace pour maintenir la composition de revêtement à base d'eau sous la forme d'un film résistant aux coulures.

13. Composition de revêtement à base d'eau de la revendication 10, dans laquelle l'épaississant est un épaississant alcalin gonflable.

14. Composition de revêtement à base d'eau de la revendication 1, qui comprend en outre un épaississant cellulosique.

15. Composition de revêtement à base d'eau de la revendication 13, dans laquelle l'épaississant cellulosique est présent à une quantité de 0,1 pour cent en poids à 3,0 pour cent en poids sur la base du poids total de la composition de revêtement à base d'eau.

16. Composition de revêtement à base d'eau de la revendication 13, qui comprend en outre des microsphères de verre.

17. Composition de revêtement à base d'eau de la revendication 15, dans laquelle les microsphères de verre sont entre 15 microns et 70 microns.

18. Composition de revêtement à base d'eau de la revendication 1, dans laquelle le retrait entre l'épaisseur du film humide et l'épaisseur du film sec est moins important que celui rapporté avec un revêtement conventionnel à % en volume de matières non volatiles comparable.
